Europäisches Patentamt

European Patent Office

Office européen des brevets

(11) Numéro de publication : **0 070 942**
**B1**

(12) FASCICULE DE BREVET EUROPÉEN

(45) Date de publication du fascicule du brevet :
20.01.88

(51) Int. Cl.⁴ : **A 01 D 89/00**

(21) Numéro de dépôt : 81401225.8

(22) Date de dépôt : 29.07.81

(54) **Dispositif formant compresseur pour ramasseur de machine de récolte.**

(43) Date de publication de la demande :
09.02.83 Bulletin 83/06

(45) Mention de la délivrance du brevet :
20.01.88 Bulletin 88/03

(84) Etats contractants désignés :
DE FR GB IT NL

(56) Documents cités :
DE-B- 1 225 912
DE-U- 1 793 975
FR-A- 1 488 481
US-A- 2 507 540
US-A- 2 729 047
US-A- 3 815 346
US-A- 3 924 391

(73) Titulaire : **JOHN DEERE (Société Anonyme)**
**8, Quai de la Madeleine**
**F-45000 Orléans (FR)**

(72) Inventeur : **Magny, Denis**
**20, Rue Maréchal Leclerc**
**F-70100 Gray (FR)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

## Description

La présente invention se rapporte à un nouveau dispositif formant compresseur pour ramasseur de machine de récolte.

Certaines machines de récolte telles que les presses à balles sont équipées à l'avant d'un ramasseur qui est constitué par un rotor muni de dents, entraîné positivement en rotation et dont les dents font saillie à travers des fentes d'un carter ou tablier pour ramasser des produits de récolte reposant sur le sol par exemple en andain, ces dents déplaçant ces produits de récolte vers le haut puis vers l'arrière sur ce tablier et s'effaçant à l'intérieur de celui-ci au moment où les produits de récolte parviennent à un dispositif de reprise de ces produits placé en aval, qui peut être de type quelconque, par exemple formé par une vis transporteuse transversale.

Il est connu de combiner à ces ramasseurs un dispositif de compression ou de retenue qui est placé à la manière d'un recouvrement au-dessus du ramasseur et qui comporte des doigts généralement élastiques dirigés vers l'arrière, afin de maintenir les produits de récolte sur le tablier du ramasseur pour favoriser leur entraînement par les dents de celui-ci et pour exercer sur ces produits un certain degré de compression, ce qui permet d'obtenir à l'aide du ramasseur, à partir d'un andain de produits reposant sur le sol, une nappe sensiblement régulière pour l'alimentation du dispositif de reprise et de traitement disposé en aval sur la machine. Les compresseurs prévus en combinaison avec les ramasseurs du type précité comportent généralement des doigts élastiques dirigés vers l'arrière depuis un point de support disposé à l'avant du rotor du compresseur et pouvant avoir un profil tel qu'ils épousent sensiblement la forme du tablier du ramasseur dans sa partie supérieure sensiblement horizontale, afin d'assurer l'effet de retenue et de compression désiré.

Les agencements de ce type sont connus depuis longtemps (Brevet US N° 2 729 047).

Une disposition créée par la Demanderesse pour un compresseur associé à un ramasseur de machine agricole est décrite dans le brevet US N° 3 815 346. Dans ce cas, les doigts du compresseur ont une forme incurvée. Ils s'étendent vers l'avant à partir d'une traverse de support monté pivotant vers le haut sur le châssis de la machine, en formant une boucle, puis vers l'arrière selon un profil curviligne, pour épouser la forme générale de la partie avant et de la partie supérieure du tablier du ramasseur. Il en résulte à la fois une augmentation du caractère élastique de ces doigts et une meilleure adaptation par flexion aux conditions de travail rencontrées.

On a également déjà proposé dans cette technique de monter ces doigts de compresseur sur un support réglable manuellement par rapport au ramasseur, en vue d'une adaptation par réglage manuel aux conditions de travail rencontrées, pour faire varier l'écartement entre ces doigts et ce tablier (brevet US N° 3 924 391).

Dans le cas de ce brevet US N° 3 924 391, ces doigts sont en outre fixés rigidement sur une barre transversale pouvant pivoter dans des supports appropriés reliés à la machine, le point de pivotement des doigts étant ainsi situé en avant du ramasseur.

On a déjà proposé également (Brevet français 1 488 481), dans le cas d'un dispositif ramasseur de véhicule autochargeur, de prévoir un compresseur constitué par une tôle montée à pivotement et dont la position de basculement vers le ramasseur est limitée au moyen de chaînes.

Le point de pivotement de la tôle se trouve ici en avant du ramasseur proprement dit et l'effet de retenue des produits ne s'exerce que dans la partie antérieure de ce ramasseur.

Le but de l'invention est d'apporter des perfectionnements aux agencements existants, en vue d'obtenir un effet de retenue et de compression optimum des produits de récolte, à la fois dans la partie avant et sur la partie supérieure du ramasseur, jusqu'à proximité du dispositif placé en aval pour la reprise de ces produits de récolte en vue de leur traitement, et en même temps une adaptation automatique du compresseur aux conditions de travail rencontrées, sans devoir exiger un réglage manuel par l'utilisateur, comme cela est le cas dans la technique antérieure.

L'invention concerne à cet effet un dispositif compresseur pour ramasseur à rotor de machine de récolte, du type comprenant un support monté sur le châssis de la machine ou sur une partie reliée à celui-ci et s'étendant vers l'avant depuis un point situé en arrière de l'axe du rotor du ramasseur et portant, sur une partie transversale située en avant du ramasseur, des doigts de nature élastique s'étendant vers l'arrière depuis cette partie transversale, en épousant sensiblement le profil du ramasseur, ce support étant monté sur le châssis de la machine de façon à pouvoir pivoter avec les doigts qu'il porte autour d'un axe transversal placé en arrière et à un niveau situé plus haut que le niveau de l'axe du rotor du ramasseur caractérisé en ce que l'articulation du support sur le châssis est réalisée de manière à permettre un libre débattement dudit support vers le bas en direction du ramasseur afin que le support et les doigts qu'il porte puissent reposer librement de tout leur poids sur la nappe des produits de récolte passant sur le ramasseur quelle que soit l'épaisseur de ladite nappe, en ce qu'il est prévu des organes rigides fixés sur le châssis de la machine et s'étendant vers l'avant au-dessus du support, et en ce que des éléments de liaison souples relient ces organes rigides au support, pour limiter de manière réglable son mouvement de basculement vers le bas.

De préférence, ces organes rigides sont constitués par des bras rigides s'étendant vers l'arrière depuis le châssis de la machine et fixés sur ce châssis.

Suivant une disposition préférentielle, les éléments de liaison souples sont constitués par des chaînes ou analogues.

L'utilisation de chaînes permet en particulier un réglage manuel rapide et simple de la position limite du compresseur en cas de besoin en accrochant des maillons de chaînes différents à des crochets prévus sur le châssis de la machine.

Suivant une réalisation préférentielle, le support du compresseur est constitué de façon connue en soi par une pièce en forme d'U portant les doigts élastiques sur sa branche transversale, ce support étant monté à pivotement sur la machine par les extrémités arrière de ses branches longitudinales.

Ce mode de montage de l'ensemble du compresseur, comprenant le support et les doigts, permet d'obtenir une adaptation automatique aux conditions de travail rencontrées, déterminée par divers facteurs comme le débit des produits de récolte reposant sur le sol, par exemple en andain, la longueur des riges de ces produits, et en conséquence leur nature, leur densité, leur degré d'humidité, etc..., étant donné que le compresseur va, par l'intermédiaire des doigts élastiques, prendre appui librement sur la nappe des produits ramassés, en combinant l'effet du montage à pivotement du compresseur autour d'un axe situé en arrière du ramasseur, permettant un libre débattement de son extrémité portant les doigts, avec l'élasticité de ces derniers. Il en résulte une meilleure adaptation de la section de passage définie entre les doigts élastiques du compresseur et le tablier du ramasseur, fournissant une compression progressive particulièrement satisfaisante des produits de récolte pour tous les débits.

La description qui va suivre, faite en regard des dessins annexés, donnés à titre non limitatif, permettra de mieux comprendre l'invention.

La Fig. 1 est une vue en perspective depuis l'avant d'une presse à balles équipée du compresseur suivant l'invention, monté au-dessus du ramasseur.

Les Fig. 2 et 3 sont des vues schématiques de profil de ce compresseur.

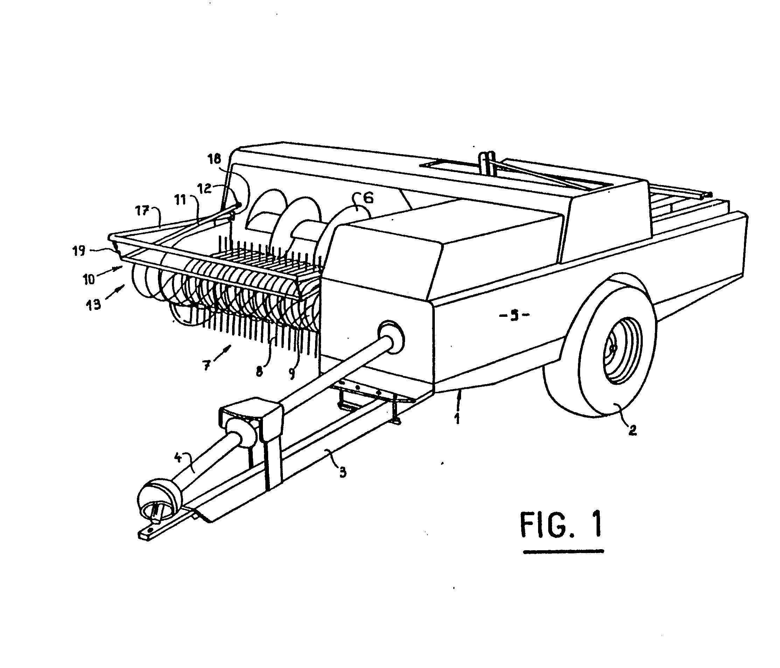

On a montré sur la Fig. 1 une presse à balles rectangulaires destinée à être adaptée à un tracteur et dont le châssis principal est désigné par la référence 1. La presse est supportée par une paire de roues 2 dont seule la roue gauche est visible sur la Fig. 1 et elle peut être attelée à un véhicule tracteur, qui est normalement un tracteur agricole, par une flèche d'attelage indiquée en 3. On a montré en 4 l'arbre articulé qui assure l'entraînement des organes mobiles de la presse à balles et qui est destiné à être raccordé d'une manière en soi classique à l'arbre de prise de force du tracteur. La presse comprend en outre un caisson longitudinal 5 prévu sur son côté gauche et une vis transporteuse transversale 6, qui reçoit les produits de récolte ramassés sur le sol d'un ramasseur 7 prévu du côté droit de la presse et qui transfère ces produits par un mouvement transversal à la chambre de la presse.

Le ramasseur 7 est d'un type bien connu dans cette technique. Il comprend un rotor muni de dents 8 et conjugué à un carter ou tablier 9, les dents traversant de la façon usuelle des fentes de ce tablier pour ramasser les produits de récolte sur le sol pendant la progression de la machine et pour les déplacer vers le haut et vers l'arrière le long de la partie supérieure du tablier jusqu'à la vis transporteuse 6, qui reprend ces produits pour la formation d'une balle. Les dents s'effacent à l'intérieur du tablier dans la portion arrière de la partie supérieure sensiblement horizontale de celui-ci.

Tous ces éléments sont classiques et il n'est pas nécessaire de les décrire plus en détail.

L'invention concerne plus spécialement le dispositif compresseur ou dispositif de retenue des produits coopérant avec ce ramasseur 7.

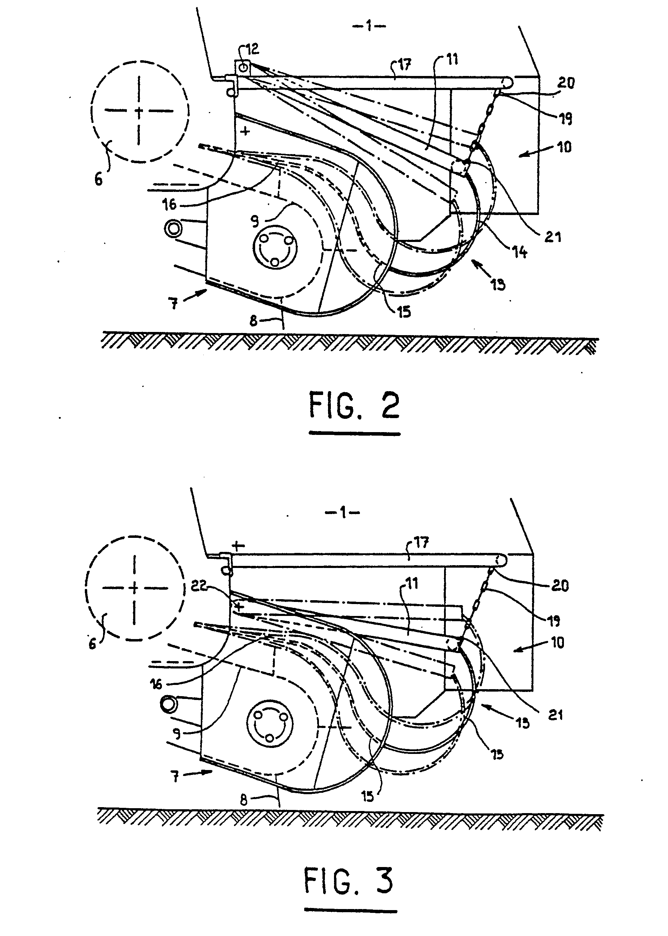

On se reportera tout d'abord à la Fig. 2, qui montre un premier mode de réalisation du compresseur 10. Ce mode de réalisation est également celui représenté sur la Fig. 1 du dessin.

Un cadre ou support 11 en forme d'U ouvert en direction de l'arrière est monté de façon pivotante par les extrémités arrière libres de ses branches, en 12, sur le corps principal 1 de la presse à balles, de chaque côté du ramasseur. La largeur de ce support en U 11, mesurée transversalement à la presse à balles, est sensiblement égale à celle du ramasseur 7. Les axes 12 de pivotement de ce support 11 sur le corps de la presse à balles sont situés en arrière de l'axe du rotor du ramasseur 7, à un niveau situé nettement au-dessus de ce ramasseur et, dans le cas présent, un peu au-dessus de l'axe de la vis transporteuse transversale 6.

Des doigts élastiques 13 sont fixés rigidement sur la branche transversale dirigée vers l'avant de ce support en U 11. Ces doigts ont une forme générale telle qu'ils se dirigent d'abord vers l'avant et vers le bas par une partie curviligne 14, pour revenir ensuite vers l'arrière et vers le haut comme montré en 15, et pour se terminer finalement par une partie sensiblement rectiligne 16 dirigée vers l'arrière.

Il est prévu, sur le corps ou châssis principal 1 de la presse à balles, deux bras rigides 17 fixés sur ce corps ou châssis en 18 et dirigés vers l'avant de chaque côté du ramasseur 7. Des éléments de liaison souples constitués ici par des chaînes 19 sont accrochés d'une part aux extrémités libres des bras 17 en 20, et au support en U en 21.

On voit aisément sur la Fig. 2 que ces chaînes ont pour fonction de limiter le débattement vers le bas du support 11 et ainsi des doigts élastiques 13 fixés sur sa branche transversale, de manière à éviter le contact de ces doigts élastiques avec le ramasseur.

On a montré sur la Fig. 2 plusieurs positions de travail du compresseur 10, et plus spécialement une position moyenne et des positions haute et basse.

Pendant le travail, les produits de récolte qui reposent sur le sol par exemple en andain sont ramassés de la manière classique par les dents 8 du ramasseur 7, soulevés à l'écart du sol et déplacés par ces dents vers l'arrière sur le tablier 9 de ce ramasseur.

Le compresseur 10 agit de manière connue pendant cette opération, afin d'éviter un échappement des produits, par exemple sous l'effet du vent, et de comprimer lesdits produits en une nappe en vue d'une meilleure reprise par la vis transporteuse 6.

On voit que le compresseur faisant l'objet de l'invention va, du fait de son montage à pivotement autour d'axes 12 situés en arrière du ramasseur, exercer sur les produits une forte compression, qui va résulter de l'ensemble du poids du support 11 et des doigts élastiques 14, ce poids agissant en porte-à-faux autour de ces axes arrière 12.

On voit également sur la Fig. 2, par les différentes positions représentées que, compte tenu de ce montage à pivotement du compresseur 10 autour des axes arrière 12 et de la forme prévue pour les doigts élastiques 13, on obtient pour toutes les positions du compresseur un effet d'adaptation optimum de ces doigts à la quantité de produits de récolte ramassés, en vue d'une compression progressive, en particulier lorsque le débit des produits est important. Cet effet est réalisé dès le début du déplacement vers le haut des produits de récolte par les dents 8 du ramasseur 7. Une adaptation est obtenue également selon la nature et la condition des produits ramassés.

On a montré sur la Fig. 3 une variante de réalisation dans laquelle le support en forme d'U 11 du compresseur 10 sur lequel les doigts élastiques 14 sont fixés est monté à pivotement autour d'axes 22 qui sont ici encore situés en arrière de l'axe du rotor du ramasseur 7, mais plus bas que dans le cas précédent. Ces axes se trouvent au-dessous de l'axe de la vis transporteuse 6. Le montage à pivotement du support 11 peut, dans ce cas, être réalisé sur les joues du ramasseur 7.

Pour tenir compte de cet abaissement des axes de pivotement du compresseur, la fixation des doigts élastiques sur la branche transversale de ce support 11 est réalisée selon un angle légèrement différent de ce qui était le cas précédemment.

On voit toutefois qu'ici encore les doigts élastiques ont une forme telle qu'ils épousent étroitement la trajectoire des dents du ramasseur, ce qui fournit un effet de retenue et de compression optimum du fait que l'ensemble du compresseur 10 prend appui sur les produits ramassés, en agissant par son poids du fait de son montage en porte-à-faux autour des axes de pivotement arrière 22.

**Revendications**

1. Dispositif compresseur (10) pour ramasseur rotor de machine de récolte, du type comprenant un support (11) monté sur le châssis (1) de la machine ou sur une partie reliée à celui-ci et s'étendant vers l'avant depuis un point situé en arrière de l'axe du rotor du ramasseur (7) et portant, sur une partie transversale située en avant du ramasseur, des doigts (13) de nature élastique s'étendant vers l'arrière depuis cette partie transversale, en épousant sensiblement le profil du ramasseur, ce support (11) étant monté sur le châssis (1) de la machine de façon à pouvoir pivoter avec les doigts (13) qu'il porte autour d'un axe transversal (12, 22) placé en arrière et à un niveau situé plus haut que le niveau de l'axe du rotor du ramasseur (7), caractérisé en ce que l'articulation du support (11) sur le châssis (1) est réalisée de manière à permettre un libre débattement dudit support vers le bas en direction du ramasseur (7) afin que le support et les doigts (13) qu'il porte puissent reposer librement de tout leur poids sur la nappe des produits de récolte passant sur le ramasseur quelle que soit l'épaisseur de ladite nappe, en ce qu'il est prévu des organes rigides (17) fixés sur le châssis (1) de la machine et s'étendant vers l'avant au-dessus du support (11), et en ce que des éléments de liaison souples (19) relient ces organes rigides (17) au support (11), pour limiter de manière réglable son mouvement de basculement vers le bas.

2. Dispositif compresseur suivant la revendication 1, caractérisé en ce que ces organes rigides (17) sont constitués par des bras rigides s'étendant vers l'arrière depuis le châssis (1) de la machine et fixés sur ce châssis.

3. Dispositif compresseur suivant la revendication 1 ou 2, caractérisé en ce que ces éléments de liaison souples (19) sont constitués par des chaînes ou analogues.

4. Dispositif compresseur suivant l'une quelconque des revendications précédentes, caractérisé en ce que le support (11) est constitué de façon connue en soi par une pièce en forme d'U portant les doigts élastiques (13) sur sa branche transversale, ce support étant monté à pivotement sur la machine par les extrémités arrière de ses branches longitudinales.

**Claims**

1. Compressing device (10) for a rotor-type pick-up of a harvesting machine, of the type comprising a support (11) mounted on the frame (1) of the machine or on a part connected to the frame and extending towards the front from a point located behind the axis of the rotor of the pick-up (7) and bearing, on a transverse part located in front of the pick-up, fingers (13) of a springy nature extending towards the rear from this transverse part, while conforming substantially to the profile of the pick-up, this support (11) being mounted on the frame (1) of the machine in such manner as to be able to pivot with the fingers (13) borne by it about a transverse axis (12, 22) located behind, and at a level situated higher than the level of, the axis of the rotor of the pick-up (7), characterised in that the articulation of the support (11) to the frame (1) is effected in such manner as to permit free movement of the said support downwardly in the direction of the pick-up (7) so that the support and the fingers (13) borne by it may be able to rest freely with all their weight on the sheet of harvesting products passing over the pick-up whatever the thickness of the said sheet, rigid means (17) fixed to the frame (1) of the machine and extending towards the front above the support (11) are provided, and flexible linking elements (19) connect these rigid means (17) to the support (11) in order to limit its downward swinging movement in an adjustable manner.

2. Compressing device according to claim 1, characterised in that these rigid means (17) are constituted by rigid arms extending towards the rear from the frame (1) of the machine and fixed to this frame.

3. Compressing device according to claim 1 or 2, characterised in that these flexible linking elements (19) are constituted by chains or the like.

4. Compressing device according to any one of the preceding claims, characterised in that the support (11) is formed in manner known per se by a U-shaped part bearing the springy fingers (13) on its cross-arm, the support being pivotally mounted on the machine by the rear ends of its longitudinal arms.

**Patentansprüche**

1. Anpreßvorrichtung (10) für den rotierenden Aufnehmer einer Erntemaschine, die eine Stützeinrichtung (11) aufweist, welche auf dem Chassis (1) der Maschine oder auf einem mit diesem verbundenen Teil montiert ist und sich von einem Punkt, der hinter der Achse des Rotors des Aufnehmers angeordnet ist, nach vorne erstreckt und die auf einem vor dem Aufsammler liegenden Querbereich Finger (13) von elastischer Natur trägt, welche sich von diesem unter merklicher Nachformung des Profils des Aufsammlers nach hinten erstrecken, wobei die Stützeinrichtung (11) auf dem Chassis (1) der Maschine so montiert ist, daß sie mit den von ihr unterstützten Fingern (13) um eine Querachse (12, 22) schwenken kann, die hinter und höher als das Niveau der Drehachse des Aufnehmers (7) angeordnet ist, dadurch gekennzeichnet, daß die Anlenkung der Stützeinrichtung (11) an dem Chassis in der Weise verwirklicht ist, daß ein freies Schwingen der gesamten Stützeinrichtung nach unten in Richtung auf den Aufsammler (7) ermöglicht ist, damit die Stützeinrichtung und die von dieser getragenen Finger (13) mit ihrem ganzen Gewicht frei auf der Schicht aus Ernteprodukten, die den Aufsammler passiert, aufliegen können, wie auch immer die Breite der Schicht ist, daß starre Organe (17) vorgesehen sind, die auf dem Chassis (1) der Maschine befestigt sind und sich oberhalb der Stützeinrichtung (11) nach vorne erstrecken und daß flexible Verbindungselement (19) die starren Organe (17) mit der Stützeinrichtung (11) verbinden, um in einstellbarer Weise deren Schwenkbewegung nach unten zu begrenzen.

2. Anpreßvorrichtung nach Anspruch 1, dadurch gekennzeichnet, daß die starren Organe (11) durch starre Arme gebildet werden, die sich von dem Chassis (1) der Maschine nach hinten erstrecken und an dem Chassis befestigt sind.

3. Anpreßvorrichtung nach Anspruch 1 oder 2, dadurch gekennzeichnet, daß die flexiblen Verbindungselemente (19) durch Ketten oder analoge Elemente gebildet sind.

4. Anpreßvorrichtung nach irgendeinem der voranstehenden Ansprüche, dadurch gekennzeichnet, daß die Stützeinrichtung (11) in an sich bekannter Weise durch ein Stück in Form eines U gebildet ist, welches die elastischen Finger (13) auf dem Querarm trägt, wobei die Stützeinrichtung auf der Maschine durch die rückwärtigen Enden der Längsarme schwenkbar montiert ist.

FIG. 1

FIG. 2

FIG. 3

2